(19) Europäisches Patentamt
European Patent Office
Office européen des brevets

(11) **EP 2 292 079 B1**

(12) **EUROPÄISCHE PATENTSCHRIFT**

(45) Veröffentlichungstag und Bekanntmachung des Hinweises auf die Patenterteilung:
**07.08.2019   Patentblatt 2019/32**

(21) Anmeldenummer: **09757317.4**

(22) Anmeldetag: **05.06.2009**

(51) Int Cl.:
**H05B 41/28** (2006.01)

(86) Internationale Anmeldenummer:
**PCT/EP2009/004060**

(87) Internationale Veröffentlichungsnummer:
**WO 2009/146934 (10.12.2009 Gazette 2009/50)**

(54) **LAMPENTYPERKENNUNG DURCH LEISTUNSFAKTORKORREKTURSCHALTUNG**

LAMP TYPE DETECTION BY MEANS OF POWER FACTOR CORRECTION CIRCUIT

IDENTIFICATION DU TYPE D'UNE AMPOULE AU MOYEN D'UN CIRCUIT DE CORRECTION DE FACTEUR DE PUISSANCE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.06.2008   DE 102008027029**

(43) Veröffentlichungstag der Anmeldung:
**09.03.2011   Patentblatt 2011/10**

(73) Patentinhaber: **Tridonic GmbH & Co KG 6851 Dornbirn (AT)**

(72) Erfinder: **FINK, Jürgen A-6911 Lochau (AT)**

(74) Vertreter: **Rupp, Christian et al Mitscherlich PartmbB Patent- und Rechtsanwälte Sonnenstraße 33 80331 München (DE)**

(56) Entgegenhaltungen:
**EP-A1- 1 881 745          DE-A1-102006 011 970 US-A1- 2003 062 848**

**Beschreibung**

Die vorliegende Erfindung betrifft ein Lampenbetriebsgerät zum Betreiben einer Lichtquelle. Insbesondere betrifft die vorliegende Erfindung ein Lampenbetriebsgerät oder ein elektronisches Vorschaltgerät (EVG), das zulässigerweise unterschiedliche Lampentypen, betreiben kann, wobei sich die Lampentypen bspw. durch ihre Leistungsklasse "Wattage") unterscheiden können.

Solche Multilampen-Betriebsgeräte zeichnen sich dadurch aus, dass sie in der Lage sind, mehrere Lampentypen zu betreiben. Das heißt, dass jede Lampe mit spezifischen Betriebsparametern für den Vorheizvorgang (im Falle von Gasentladungslampen mit Heizwendeln), den Zündvorgang und/oder den eigentlichen Brennvorgang versorgt werden kann.

Dies setzt voraus, dass das Multilampen-Gerät Informationen selbsttätig anhand einer Messung einen Messwert ermittelt, dem bspw. in einer Tabelle oder über eine Funktion wenigstens ein einzustellender Wert für einen Betriebsparameter der vorliegenden und/oder einer folgenden Betriebsphase zugeordnet ist. Dieser Vorgang der Erfassung wenigstens einer für den Lampentyp charakteristischen Grösse und der Zuordnung zu einem Betriebsparameter wird üblicherweise "Lampentyperkennung" genannt.

In diesem Hinblick ist es aus der EP 1 881 745 A1 bereits bekannt, dass anhand einer Wendelwiderstandsmessung eine Lampentyperkennung durchgeführt wird. Zündparameter werden entsprechend dieser Lampentyperkennung gesetzt und die Lampe wird gestartet. Dann wird aus der Zündspannung auf die Leistung geschlossen und aus dieser Leistung wiederum auf die bei korrekter Lampentyperkennung für diese Leistung vorliegende Einschaltzeit bzw. $t_{on}$-Zeit des Schalters einer Leistungsfaktorkorrektur-Schaltung (bzw. PFC, Power Factor Correction).

Diese abgeschätzte $t_{on}$-Zeit wird anschließend mit der tatsächlich vorliegenden verglichen. Falls die geschätzte mit der tatsächlich gemessenen Einschaltzeit des Schalters übereinstimmt, lag also anhand des Wendelparameters eine korrekte Erkennung des Lampentyps vor. Falls eine Abweichung vorliegt, war die ursprüngliche Lampentyperkennung anhand des Wendelparameters nicht korrekt, so dass sie verworfen wird und gegebenenfalls eine neue Lampentyperkennung durchgeführt wird.

Die $t_{on}$-Zeit wird also bei diesem Stand der Technik nicht einem Betriebsparameter zugeordnet, so dass also auch keine Lampentyperkennung anhand der $t_{on}$-Zeit erfolgt. Vielmehr wird die $t_{on}$-Zeit nur zur Plausibilisierung einer Lampentyperkennung verwendet, die anhand von Lastkreisparametern erfolgt.

Festzuhalten bleibt somit, dass beim Stand der Technik die Lampentyperkennung zur Festlegung von Betriebsparametern der Lampe mittels einer Erfassung im Lastkreis erfolgt. Mit anderen Worten wird die Lampentyperkennung ausgehend von einer Erfassung im Bereich des Lastkreises durchgeführt, wie beispielsweise einer Erfassung eines Heizwendelparameters gemäß der EP 1 881 745 A1.

Die Druckschrift DE 10 2006 011 970 A1 offenbart ein geregeltes Vorschaltgerät für eine Lampe.

Der vorliegenden Erfindung liegt nunmehr die Aufgabe zu Grunde, ein alternatives Vorgehen zur Lampentyperkennung vorzuschlagen.

Die Erfindung basiert in der Tat im Gegensatz zum Stand der Technik auf dem Prinzip, dass ausgehend von einem Parameter einer aktiv getakteten Leistungsfaktor-Korrekturschaltung ("PFC"), insbesondere der gemessenen $t_{on}$-Zeit des PFC-Schalters ein oder mehrere Betriebsparameter des EVGs, insbesondere des Lastkreises des EVGs gesetzt werden. Dies ist insofern eine Umkehrung verschiedener Dokumente aus dem Stand der Technik, bei denen ausgehend von Messungen im Lastkreis Parameter des PFCs, insbesondere die $t_{on}$-Zeit gesetzt wird.

(Wie allgemein bekannt erzeugt die PFC-Schaltung eine vorzugsweise geregelte Zwischenkreisspannung, mit der bspw. ein Wechselrichter versorgt werden kann, der einen Lastkreis mit der Lampe mit AC-Spannung versorgt.)

Erfindungsgemäß wird aus der $t_{on}$-Zeit des PFC-Schalters, aus der bekannten Induktivität der Spule des PFCs sowie aus der gemessenen Netzeingangsspannung des PFCs auf die bereitgestellte Leistung geschlossen. Diese Leistung kann als Ist-Leistung mit einer Soll-Leistung verglichen werden. Die Differenz wird einem Regelungsalgorithmus zugeführt, der abhängig von einer etwaigen Differenz als Steuergröße die Zwischenkreisspannung und/oder die Frequenz des Wechselrichters ändert.

Ausgehend von der durch die $t_{on}$-Zeit ermittelten Leistung lassen sich auch Überwachungsvorgänge durchführen. Wenn beispielsweise die Lampe erlischt oder herausgenommen wird, wird der Lastkreis keine Leistung mehr abnehmen, die Busspannung ansteigen und der PFC-Regler somit die $t_{on}$-Zeit gegen 0 fahren. Dadurch kann erkannt werden, dass keine Leistung mehr in den Lastkreis gepumpt wird, was beispielsweise zu einer Fehlerabschaltung führen kann.

Es muss kein Wechselrichter mit aktiv angesteuerten Schaltern in Form einer Halbbrücke oder Vollbrücke vorliegen, vielmehr kann auch eine Freischwingerschaltung für die Bereitstellung der hochfrequenten Wechselspannung für den Betrieb der Lampe vorgesehen sein. Die PFC-Schaltung kann also in diesem Fall die Leistung noch über die Zwischenkreisspannung steuern oder aber rein als Überwachungsgröße für die Fehlerabschaltung dienen.

Der Wechselrichter mit dem Lastkreis zur Lampenansteuerung kann aber auch eine andere Topologie wie beispielsweise einen Tiefsetzsteller, einen Hochsetzsteller oder eine Sperrwandler aufweisen.

Die angeschlossene Lampe kann auch mit einer Gleichspannung oder gleichgerichteten Wechselspannung betrieben werden.

Die Erfindung lässt sich auch sehr gut auf den Betrieb von Hochdruckentladungslampen oder HID (High Intensity Discharge) Lampen anwenden, eine Unterform der Gasentladungslampe, bei denen bekanntlich mangels Wendeln mit diesen keine Erkennung durchführbar ist.

Die Erfindung lässt sich auch sehr gut auf den Betrieb von organischen oder auch anorganischen LED (Light Emitting Diode) Lampen anwenden, bei denen bekanntlich mangels Wendeln mit diesen keine Erkennung durchführbar ist.

Gemäß einem ersten Aspekt der Erfindung wird ein Verfahren zur Lampentyperkennung einer an einem Betriebsgerät angeschlossenen Lampe eines Lastkreises nach Anspruch 1 vorgeschlagen.

Wie bereits erwähnt, wird eine Auswertung der vorliegenden Taktung, d.h. bspw. des Tastverhältnisses, der Einschaltzeitdauer $t_{on}$ und/oder der Ausschaltzeitdauer bzw. der Frequenz des Schalters der PFC-Schaltung durchgeführt.

Die durchgeführte Regelung kann als Stellgröße eine von der PFC-Schaltung bereitgestellte Zwischenkreisspannung und/oder die Frequenz eines an der PFC-Schaltung angeschlossenen Wechselrichters ändern.

Alternativ kann die Betriebsbedingung der Lampe, beispielsweise Gasentladungslampe, ein Betrieb des resonanten Lastkreises mit fixer Frequenz sein.

Gemäß einem weiteren Aspekt der Erfindung wird eine Steuerschaltung einer von einem Schalter gesteuerten Leistungsfaktorkorrektur- bzw. PFC-Schaltung nach Anspruch 3 vorgeschlagen.

Die Steuerschaltung kann eine Auswertung der Einschaltzeitdauer $t_{on}$ oder der Ausschaltzeitdauer des Schalters der PFC-Schaltung aufweisen.

Die durchgeführte Regelung kann als Stellgröße eine von der PFC-Schaltung bereitgestellte Zwischenkreisspannung und/oder die Frequenz eines an der PFC-Schaltung angeschlossenen Wechselrichters ändern.

Alternativ kann die Betriebsbedingung der Lampe ein Betrieb des resonanten Lastkreises mit fixer Frequenz sein.

Die Steuerschaltung kann als anwendungsspezifische integrierte Schaltung (Application Specific Integrated Circuit - ASIC) ausgebildet sein.

Des Weiteren wird eine Steuerschaltung einer von einem Schalter gesteuerten Leistungsfaktorkorrektur- bzw. PFC-Schaltung vorgeschlagen, zur Überwachung des Lampenbetriebs einer an einem Betriebsgerät angeschlossenen Lampe eines Lastkreises. Die Steuerschaltung weist auf: Mittel zum Betrieb der Lampe mit einer definierten Betriebsweise, Mittel zur Auswertung von mindestens einem Parameter der PFC-Schaltung, wie beispielsweise der Einschaltzeitdauer $t_{on}$ oder der Ausschaltzeitdauer des Schalters, und Mittel zur Überwachung des Lampenbetriebs durch Überwachung des ausgewerteten Parameters der PFC-Schaltung.

Gemäß einem weiteren Aspekt der Erfindung wird eine Leistungsfaktorkorrektur-Schaltung für ein Lampenbetriebsgerät, aufweisend eine erfindungsgemäße Steuerschaltung vorgeschlagen.

Die Leistungsfaktorkorrektur-Schaltung kann eine mit einer Wechselspannung oder Gleichspannung versorgte und vom Schalter geladene und entladene Spule aufweisen.

Gemäß einem weiteren Aspekt der Erfindung wird ein Betriebsgerät für eine Lampe zur Lampentyperkennung einer an dem Betriebsgerät angeschlossenen Lampe eines Lastkreises nach Anspruch 9 vorgeschlagen.

Der Lastkreis kann einen LC Schwingkreis aufweisen.

Weitere Merkmale und Vorteile der Erfindung werden deutlich beim Lesen der folgenden Beschreibung bevorzugter Ausführungsformen, die auf die Zeichnung Bezug nimmt.

Fig. 1      zeigt eine Ausführungsform eines erfindungsgemäßen Vorschaltgeräts bzw. elektronischen Vorschaltgeräts,

Fig. 2      zeigt einen beispielhaften Verlauf der Spannung des Speicherkondensators C2,

Fig. 3      zeigt Kennlinien von unterschiedlichen Typen von Lampen,

Fig. 4      zeigt einen möglichen Zeitverlauf des Gleichstroms durch die Spule der Leistungsfaktorkorrektur-Schaltung im Verhältnis zum gleichgerichteten Netzstrom Ui,

Fig. 5      zeigt einen beispielhaften Verlauf der Einschaltzeit des Schalters S1 und der sich daraus ergebenden Leistung an der Lampe, und

Fig. 6      zeigt eine weitere Ausführungsform eines erfindungsgemäßen Vorschaltgeräts

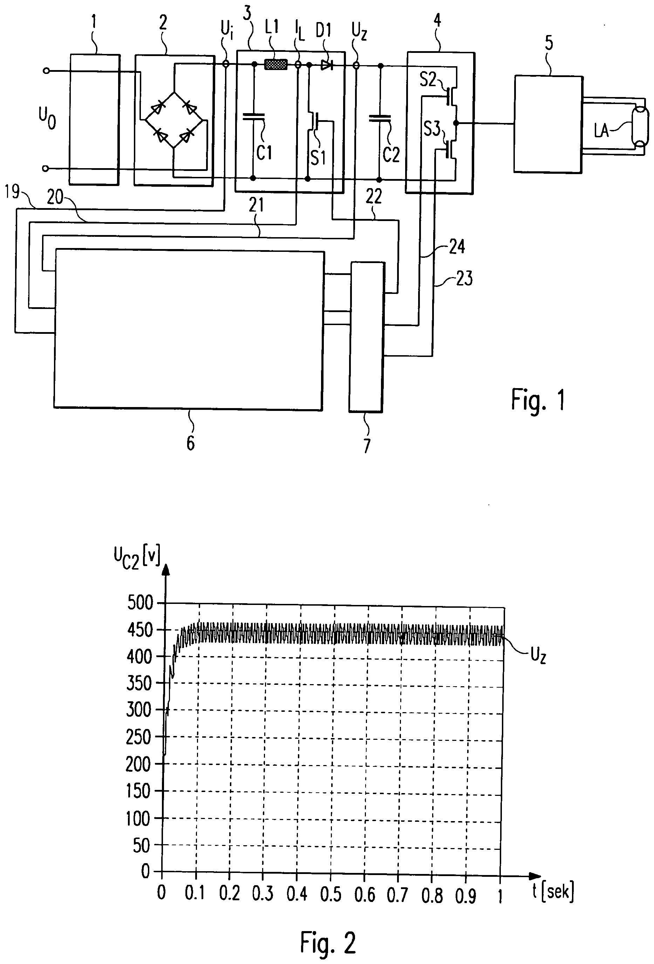

Die Fig. 1 zeigt eine Ausführungsform eines erfindungsgemäßen Vorschaltgeräts bzw. elektronischen Vorschaltgeräts, das eingangsseitig über ein Hochfrequenzfilter 1 an eine Netzversorgungsspannung U0 angeschlossen ist. Am Ausgang des Hochfrequenzfilters 1 befindet sich eine Gleichrichterschaltung 2 in Form eines Vollbrückengleichrichters, welche die Netzversorgungsspannung U0 in eine gleichgerichtete Eingangsspannung Ui für eine Glättungsschaltung bzw. Leistungsfaktorkorrektur-Schaltung 3 umsetzt.

Diese Leistungsfaktorkorrektur-Schaltung 3 umfasst einen Glättungskondensator C1 sowie eine Spule L1, einen steuerbaren Schalter S1 und eine Diode D1 eines Hochsetzstellers. Anstelle des Hochsetzstellers können allerdings auch andere Schaltregler verwendet werden.

Die Eingangsspannung Ui wird von dem Glättungskondensator C1 gesiebt und der Spule L1 zugeführt. Die Spule L1 ist vor der Diode D1 in Serie geschaltet. Nach der Diode D1 wird eine Zwischenkreisspannung Uz bereitgestellt. An der Verbindung zwischen der Spule L1 und der Diode D1 ist der steuerbare Schalter S1, der beispielsweise in Form eines MOS-Feldeffekttransistors ausgestaltet sein kann, angeschlossen.

Ist der Schalter S1 eingeschaltet, so ist die Spule L1 gegen Masse kurzgeschlossen und die Diode D1 gesperrt. Die Spule L1 kann sich somit aufladen, so dass Energie in der Spule L1 gespeichert werden kann.

Ist der Schalter S1 dagegen ausgeschaltet, so ist die Diode D1 leitend. Die Spule L1 entlädt sich dann über die Diode D1 in einen Speicherkondensator C2. Dadurch wird die Energie an diesen Speicherkondensator C2 übertragen.

Ein beispielhafter Verlauf der Spannung des Speicherkondensators C2 wird in Fig. 2 gezeigt. Dabei ist zu erkennen, dass eine Steuerschaltung 6 bzw. eine Treiberschaltung 7 für die Bereitstellung einer konstanten Zwischenkreisspannung Uz sorgt, und dies unabhängig von Versorgungs- sowie Last-Schwankungen.

Durch ein entsprechendes Schalten des Schalters S1 wird somit die über dem sich an die Leistungsfaktorkorrektur-Schaltung 3 anschließenden Speicherkondensator C2 anliegende Zwischenkreisspannung Uz erzeugt, die einem Wechselrichter 4 zugeführt wird.

Dieser Wechselrichter 4 wird durch zwei weitere in einer Halbbrückenanordnung angeordnete MOS-Feldeffekttransistoren S2 und S3 gebildet. Durch ein bekanntes hochfrequentes Ansteuern der beiden Feldeffekttransistoren S2, S3 wird an deren Mittenabgriff eine Wechselspannung erzeugt, die einem Lastkreis 5 mit einer daran angeschlossenen Lampe LA zugeführt wird. Beispielsweise kann es sich bei der Lampe LA um eine Gasentladungslampe handeln.

Das Ansteuern der drei MOS-Feldeffekttransistoren S1, S2, S3 der Leistungsfaktorkorrektur-Schaltung 3 und des Wechselrichters 4 erfolgt durch die Steuerschaltung 6, welche entsprechende Schaltinformationen erzeugt und an die Treiberschaltung 7, welche an die Steuerschaltung 6 angeschlossen ist, übermittelt. Die Treiberschaltung 7 setzt die Schaltinformationen in entsprechende Steuersignale um und steuert über entsprechende Leitungen 22, 23, 24 die Gates der drei MOS-Feldeffekttransistoren S1, S2, S3 an.

Die Steuerung der Schalter S1, S2, S3 erfolgt dermaßen, dass die angeschlossene Lampe LA mit einer definierten Betriebsweise betrieben wird. Diese Betriebsweise kann beispielsweise eine Regelung auf konstanten Lampenstrom, eine Regelung auf konstanter Lampenspannung, eine Regelung auf konstante Lampenleistung oder ein Betrieb eines resonanten Ausgangskreises bzw. Lastkreises 5 mit fixer Frequenz sein. Im letzteren Fall umfassen der Wechselrichter 4 und der Lastkreis 5 vorzugsweise eine aus den zwei Schaltern S2, S3 bestehende Halbbrücke sowie einen LC-Schwingkreis.

Die Lampe LA wird erfindungsgemäß mit einem definierten Parameter betrieben, der sicherstellt, dass die verschiedenen Lampenkonfigurationen bzw. Lampentypen unterschieden werden können.

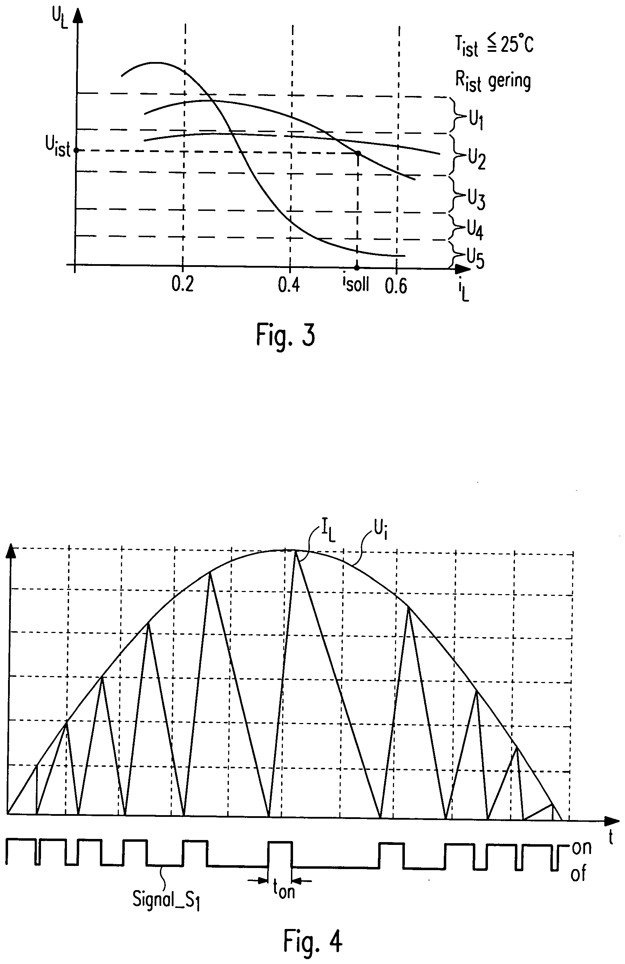

Fig. 3 zeigt in diesem Zusammenhang verschiedene Kennlinien von unterschiedlichen Typen von Lampen. Je nach Betriebsparameter kann zwischen den verschiedenen Kennlinien - hier insbesondere zwischen den drei gezeigten Kennlinien - und den entsprechenden Lampentypen unterschieden werden.

Die Betriebsparameter der Leistungsfaktorkorrektur-Schaltung 3 werden der Steuerschaltung 6 eingangsseitig zugeführt, siehe Fig. 1. Dabei werden in bekannter Weise über Eingangsleitungen 19, 20, 21 zum Regeln der Zwischenkreisspannung Uz erforderliche Betriebsparameter übermittelt. Die Eingangsleitung 19 dient dabei zum Übertragen eines der gleichgerichteten Versorgungswechselspannung Ui entsprechenden Signals. Mit Hilfe der Eingangsleitungen 20, 21 werden der durch die Spule L1 fließende Strom IL - genauer genommen ein diesem Strom IL entsprechender Parameter - und die Zwischenkreisspannung Uz selbst erfasst.

Die Steuereinheit 6 selbst ist vorzugsweise als anwendungsspezifische integrierte Schaltung (Application Specific Integrated Circuit - ASIC) ausgebildet.

Fig. 4 zeigt einen möglichen Zeitverlauf des Gleichstroms durch die Spule L1 im Verhältnis zum gleichgerichteten Netzstrom Ui, wobei die Leistungsfaktorkorrektur-Schaltung 3 im Borderline-Modus (im englischen auch critical conduction mode genannt) betrieben wird. In diesem Modus wird der Schalter S1 sofort wieder eingeschaltet, sobald der Strom IL durch die Spule L1 auf Null abfällt. Dies bedeutet, dass bei einem Nulldurchgang des Spulenstroms die Treiberschaltung 7 ein positives Steuersignal Signal_S1 erzeugt zum Einschalten des Schalters S1 über die Steuerleitung 22.

Wie bereits erwähnt, kann die Leistungsfaktorkorrektur-Schaltung 3 auf eine definierte Ausgangsspannung regeln, wobei sich aufgrund der Regelung eine zumindest über eine Netzhalbwelle nahezu konstante Einschaltzeit $t_{on}$ der Leistungsfaktorkorrektur-Schaltung 3 einstellt. Wie aus der Fig. 4 ersichtlich, ändert sich diese $t_{on}$ Zeitdauer aufgrund des notwendigen langsamen Reglers der Leistungsfaktorkorrektur nur sehr langsam, so dass $t_{on}$ während der Zeitdauer einer Netzhalbwelle der gleichgerichtete Eingangsspannung als konstant betrachtet werden kann.

Ausgehend von der folgenden Gleichung kann dann das System ausgewertet werden:

$$Pin = Ui^2 / (2*L1) * t_{on}$$

wobei Ui die bereitgestellte Spannung bzw. die Netzspannung, Pin die entsprechende bereitgestellte Leistung, L1 die Induktivität der Spule L1, und $t_{on}$ die Einschaltzeit des Schalters S1 darstellen.

Die Spannung Ui wird wie oben bereits erwähnt vorzugsweise von der Steuerschaltung 6 gemessen. Der Wert der Induktivität der Spule L1 ist vom Betriebsgerät bzw. von der Steuerschaltung 6 bekannt. Aber auch die Einschaltzeit $t_{on}$ des Schalters S1 ist ebenso vom Regler innerhalb der Steuerschaltung 6 bekannt.

Somit kann die bereitgestellte Leistung Pz vorzugsweise von der Steuerschaltung 6 gemäß der oben definierten Gleichung berechnet werden.

Aus der gewählten Regelung, beispielsweise Regelung auf die Ausgangsspannung, wird also die Einschalt-Zeitdauer des Schalters S1 ausgewertet und daraus auf eine Lampenspannung bzw. auf einen Lampentyp geschlossen. Aufgrund des erkannten Lampentyps können die angepassten Lampenbetriebsparameter insbesondere für den Betrieb des Ausgangskreises 5 gewählt werden. Zusätzlich dazu können dann auch andere Regelparameter des elektronischen Vorschaltgeräts, wie beispielsweise der Leistungsfaktorkorrektur, angepasst werden.

Anstelle oder zusätzlich zur Auswertung der Einschaltzeitdauer $t_{on}$ oder der Ausschaltzeitdauer des Schalters S1 der PFC-Schaltung 3 kann auch das Tastverhältnis und / oder die Frequenz des Schalters S1 der PFC-Schaltung 3 ausgewertet werden.

Gemäß einer alternativen Ausführungsform kann auch der Lampenbetrieb überwacht werden. Die Lampe LA wird dabei durch den Ausgangskreis in einem definierten Zustand betrieben und die Logik der Leistungsfaktorkorrektur übernimmt neben der Regelung der Leistungsfaktorkorrektur über die Auswertung der Daten analog zur Lampenerkennung die Überwachung des Lampenbetriebs. Somit kann erfindungsgemäß erkannt werden, dass der Lastkreis keine Leistung mehr abnimmt. Diese Information kann dazu benutzt werden, z.B. Fehler der Lampe LA zu erkennen und das Betriebsgerät entsprechend abzuschalten.

Alternativ kann auch als Parameter des Betriebsgerätes die Leistung der Lampe entsprechend der Auswertung von mindestens einem Parameter der PFC-Schaltung 3 angepaßt werden. Beispielsweise können Bauteiltoleranzen oder auch Toleranzen der Lampe dadurch ausgeglichen werden, dass das Betriebsgerät die Lampe in einer Initialphase mit einem vorgegebenen Parameter der PFC-Schaltung 3 ansteuert und somit die Lampe mit einer Initialleistung speist, und aufgrund der Auswertung mindestens eines Parameters der PFC-Schaltung 3 kann zu einem späteren Zeitpunkt der für die ausgegebene Leistung verantwortliche Parameter des Betriebsgerätes angepasst werden. Dieser Parameter kann beispielsweise die Frequenz eines an die PFC-Schaltung 3 angeschlossenen Wechselrichters 4 oder auch die Einschaltzeitdauer $t_{on}$ oder ein anderer Ansteuerparameter des Schalters S1 der PFC-Schaltung 3 sein.

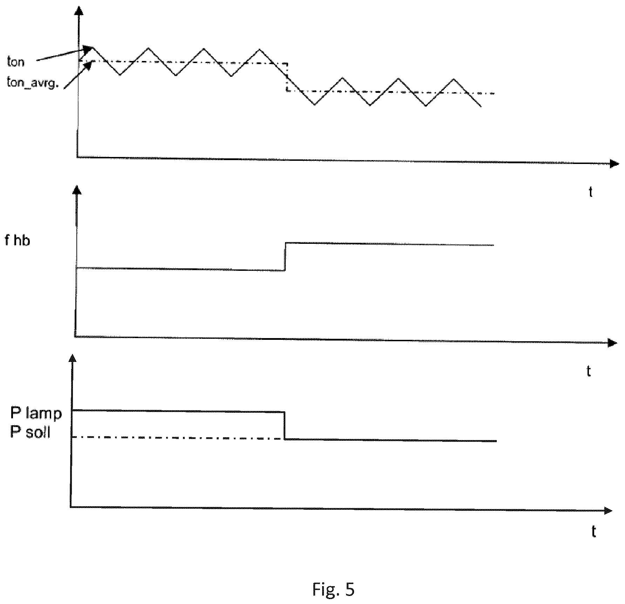

In Fig. 5 ist ein möglicher Zeitverlauf für eine Regelung der Lampenleistung über die Einschaltzeitdauer $t_{on}$ des Schalters S1 der PFC-Schaltung 3 gezeigt. Wie bereits erwähnt, kann die Leistungsfaktorkorrektur-Schaltung 3 auf eine definierte Ausgangsspannung regeln, wobei sich aufgrund der Regelung eine zumindest über eine Netzhalbwelle nahezu konstante Einschaltzeit $t_{on}$ der Leistungsfaktorkorrektur-Schaltung 3 einstellt. Die Einschaltzeitdauer $t_{on}$ des Schalters S1 kann aufgrund der verhältnismäßig langsamen Regelschleife der Leistungsfaktorkorrektur-Schaltung 3 zwischen zwei Grenzwerten hysteretisch hin- und herwechseln.

Über die Zeit gemittelt ergibt sich damit eine gemittelte Einschaltzeit $t_{on\_avrg}$. Anhand dieser Größe bzw. eines dieser Größe entsprechenden Parameters kann die aufgenommene Leistung $P_{lamp}$ ermittelt werden. Wenn festgestellt wird, dass die aufgenommene Leistung $P_{lamp}$ nicht der Soll-Leistung $P_{soll}$ entspricht, kann ein Parameter des Betriebsgerätes entsprechend eingestellt werden. Beispielweise kann die Frequenz des an die PFC-Schaltung 3 angeschlossenen Wechselrichters 4 geändert werden. Gemäß dem Beispiel der Fig. 5 würde anhand der Auswertung der gemittelte Einschaltzeit $t_{on\_avrg}$ erkannt werden, dass die aufgenommene Leistung $P_{lamp}$ höher als die gewünschte Soll-Leistung $P_{soll}$ ist. Daher müßte die Frequenz des an die PFC-Schaltung 3 angeschlossenen Wechselrichters erhöht werden, um die aufgenommene Leistung $P_{lamp}$ auf die gewünschte Soll-Leistung $P_{soll}$ herabzusetzen. Alternativ könnte aber auch ein anderer Parameter des Betriebsgerätes eingestellt werden, beispielsweise direkt die Einschaltzeit $t_{on}$ des Schalters S1 oder auch der Sollwert für die Busspannung. Eine Einstellung eines Parameters der PFC-Schaltung 3 bietet den Vorteil, dass eine Freischwingerschaltung für die Bereitstellung der hochfrequenten Wechselspannung für den Betrieb der Lampe eingesetzt werden kann. Die Einstellung eines Parameters der PFC-Schaltung 3 kann aber auch beispielsweise bei einem Betriebsgerät mit fix-frequenter Ansteuerung des Wechselrichters 4 angewendet werden. Dies bietet den Vorteil, dass eine sehr einfache Ansteuerung des Wechselrichters 4 realisiert werden kann und die Einstellung der Leistung über die PFC-Schaltung 3 erfolgen kann.

Die Auswertung von mindestens einem Parameter der PFC-Schaltung 3 kann auch dazu genutzt werden, um als Überwachungsgröße für eine Fehlerabschaltung zu dienen. Beispielsweise kann auf diese Art ein Lampendefekt festgestellt werden, wenn die Auswertung von mindestens einem Parameter der PFC-Schaltung 3, beispielsweise der gemittelten Einschaltzeit $t_{on\_avrg}$, ergibt, dass die Soll-Leistung $P_{soll}$ stark unterschritten wird. Auf diese Weise kann beispielsweise bei einer Gasentladungslampe auch ein Wendeldefekt festgestellt werden, wenn während der Vorheizphase festgestellt wird, dass die aufgenommene Leistung $P_{lamp}$ auf die gewünschten Soll-Leistung $P_{soll}$ für das Vorheizen entspricht.

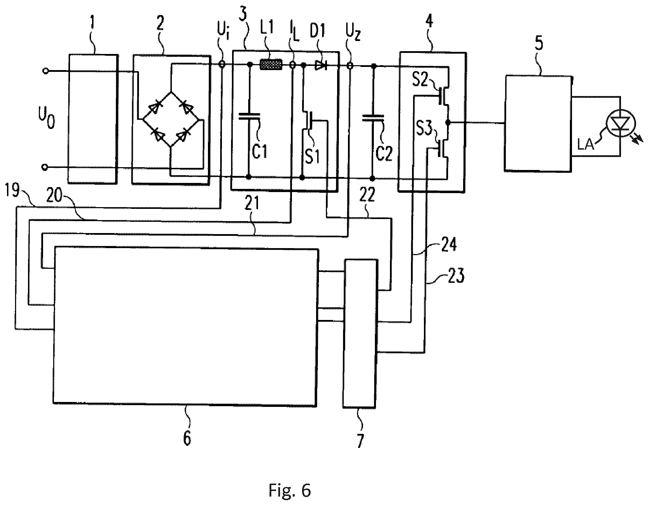

Die Fig. 6 zeigt eine weitere Ausführungsform eines erfindungsgemäßen Vorschaltgeräts bzw. elektronischen Vorschaltgeräts. In diesem Beispiel wird als Lampe eine LED angesteuert. Das erfindungsgemäße Vorschaltgerät gemäß diesem Beispiel funktioniert sehr ähnlich wie das Vorschaltgerät gemäß Fig. 1.

Da eine LED vorzugsweise mit einem Gleichstrom betrieben wird, kann der Lastkreis 5 an seinem Ausgang einen Gleichrichter aufweisen oder aber es können auch zumindest zwei LED als Lampe antiparallel am Ausgang des Lastkreises 5 angeordnet sein.

Der Lastkreis 5 kann einen Transformator zur Potentialtrennung aufweisen. Der Wechselrichter 4 mit dem Lastkreis 5 kann beispielsweise durch eine resonante Halbbrückenschaltung mit einem Transformator zur Potentialtrennung und LC Schwingkreis und einen Gleichrichter am Ausgang des Lastkreises 5 gebildet werden.

Der Wechselrichter 4 und der Lastkreis 5 zur Lampenansteuerung kann aber auch eine andere Topologie wie beispielsweise einen Tiefsetzsteller, einen Hochsetzsteller oder eine Sperrwandler aufweisen. Die Steuerung der Schalter S2 und/oder S3 des Wechselrichters 4 kann auch mittels einer Pulsweitenmodulation oder eines anderen Ansteuerverfahrens erfolgen.

Die Steuerung der Schalter S1, S2, S3 erfolgt dermaßen, dass die angeschlossene Lampe LA mit einer definierten Betriebsweise betrieben wird. Diese Betriebsweise kann beispielsweise eine Regelung auf konstanten Lampenstrom, eine Regelung auf konstanter Lampenspannung, eine Regelung auf konstante Lampenleistung oder ein Betrieb mit fixer Frequenz sein.

Die Lampe LA wird erfindungsgemäß mit einem definierten Parameter betrieben, der sicherstellt, dass die verschiedenen Lampenkonfigurationen bzw. Lampentypen unterschieden werden können.

**Patentansprüche**

1. Verfahren zur Lampentyperkennung einer an einem Betriebsgerät angeschlossenen Lampe (LA) eines Lastkreises (5),
   wobei das Betriebsgerät eine PFC-Schaltung (3) mit einem getakteten Schalter (S1) aufweist, die eine DC-Spannung bereitstellt,
   aufweisend den Schritt:

   - Auswertung wenigstens eines Taktungsparameters, wie bspw. des Tastverhältnisses, der Frequenz, der Einschaltzeitdauer $t_{on}$ und/oder der Ausschaltzeitdauer des Schalters (S1) der PFC-Schaltung (3), um daraus auf einen Lampentyp zu schließen und davon abhängig wenigstens einen Lampenbetriebsparameter des Betriebsgeräts einzustellen,
   **dadurch gekennzeichnet,**
   **dass** die Auswertung bei Betrieb der Lampe (LA) mit einer Regelung auf einen konstanten Lampenstrom erfolgt.

2. Verfahren gemäß Anspruch 1,
   wobei die durchgeführte Regelung als Stellgröße eine von der PFC-Schaltung (3) bereitgestellte Zwischenkreisspannung (Uz) und/oder die Frequenz eines an der PFC-Schaltung (3) angeschlossenen Wechselrichters (4) ändert.

3. Steuerschaltung (6) einer von einem Schalter (S1) gesteuerten Leistungsfaktorkorrektur- bzw. PFC-Schaltung (3) zur Lampentyperkennung einer an einem Betriebsgerät angeschlossenen Lampe (LA) eines Lastkreises (5), aufweisend:

   - Mittel zur Auswertung wenigstens eines Taktungsparameters, wie bspw. des Tastverhältnisses, der Frequenz, der Einschaltzeitdauer $t_{on}$ und/oder der Ausschaltzeitdauer des Schalters (S1) der PFC-Schaltung (3), um daraus auf einen Lampentyp zu schließen und davon abhängig wenigstens einen Lampenbetriebsparameter einzustellen, und
   - Mittel zur Regelung der von der PFC-Schaltung (3) bereitgestellten Leistung,
   **gekennzeichnet durch**
   - Mittel zum Betrieb der Lampe (LA) mit konstant geregeltem Lampenstrom während der Auswertung des Taktungsparameters..

4. Steuerschaltung (6) gemäß Anspruch 3,
   aufweisend die Auswertung der Einschaltzeitdauer $t_{on}$ des Schalters (S1) der PFC-Schaltung (3).

5. Steuerschaltung (6) gemäß einem der Ansprüche 3 bis 4, wobei die durchgeführte Regelung als Stellgröße eine von der PFC-Schaltung (3) bereitgestellte Zwischenkreisspannung (Uz) und/oder die Frequenz eines an der PFC-Schaltung (3) angeschlossenen Wechselrichters (4) ändert.

6. Steuerschaltung (6) gemäß einem der Ansprüche 3 bis 5,
   die als anwendungsspezifische integrierte Schaltung (Application Specific Integrated Circuit - ASIC), Mikrokontroller oder Hybridversion davon ausgebildet ist.

7. Leistungsfaktorkorrektur-Schaltung (3) für ein Lampenbetriebsgerät aufweisend eine Steuerschaltung (6) gemäß einem der Ansprüche 3 bis 6.

8. Leistungsfaktorkorrektur-Schaltung (3) gemäß Anspruch 7,
   weiterhin aufweisend eine mit einer Wechselspannung versorgte und vom Schalter (S1) geladene und entladene Spule (L1).

9. Betriebsgerät für eine Lampe (LA) zur Lampentyperkennung einer an dem Betriebsgerät angeschlossenen Lampe (LA) eines Lastkreises (5) aufweisend:

- eine PFC-Schaltung (3) mit einem getakteten Schalter (S1),
Mittel zur Auswertung wenigstens eines Taktungsparameters, wie bspw. des Tastverhältnisses, der Frequenz, der Einschaltzeitdauer $t_{on}$ und/oder der Ausschaltzeitdauer des Schalters (S1) der PFC-Schaltung (3), um daraus auf einen Lampentyp zu schließen und davon abhängig wenigstens einen Lampenbetriebsparameter des Betriebsgeräts einzustellen,
**gekennzeichnet durch**
Mittel zum Betrieb der Lampe (LA) mit konstant geregeltem Lampenstrom während der Auswertung des wenigstens einen Taktungsparameters.

10. Betriebsgerät gemäß Anspruch 9,
wobei der Lastkreis (5) einen LC Schwingkreis aufweist.

**Claims**

1. A method for the lamp type detection of a lamp (LA) of a load circuit (5) connected to an operating device, wherein the operating device has a PFC circuit (3) with a clocked switch (S1), which provides DC voltage,
having the step:

- Evaluation of at least one clocking parameter, such as, for example, the duty cycle, the frequency, the switched-on time $t_{on}$ and/or the switched-off time of the switch (S1) of the PFC circuit (3), in order to infer a lamp type therefrom and depending thereon to set at least one lamp operating parameter of the operating device,

**characterized in**
**that** the evaluation takes place during the operation of the lamp (LA) with a control at a constant lamp current.

2. A method according to Claim 1,
wherein the implemented control as a manipulated variable changes an intermediate circuit voltage (Uz) provided by the PFC circuit (3) and/or the frequency of an inverter (4) connected to the PFC circuit (3).

3. A control circuit (6) of a power factor correction- or PFC circuit (3) controlled by a switch (S1) for the lamp type detection of a lamp (LA) of a load circuit (5) connected to an operating device, having:

- Means for evaluating at least one clocking parameter, such as, for example, the duty cycle, the frequency, the switched-on time $t_{on}$ and/or the switched-off time of the switch (S1) of the PFC circuit (3), in order to infer a lamp type therefrom and depending thereon to set at least one lamp operating parameter of the operating device, and means for control of the power provided by the PFC circuit (3),
**characterized by**
- means for operating the lamp (LA) with constant controlled lamp current during the evaluation of the clocking parameter.

4. A control circuit (6) according to Claim 3,
having the evaluation of the switched-on time $t_{on}$ of the switch (S1) of the PFC circuit (3).

5. A control circuit (6) according to any one of Claims 3 to 4,
wherein the implemented control as a manipulated variable changes an intermediate circuit voltage (Uz) provided by the PFC circuit (3) and/or the frequency of an inverter (4) connected to the PFC circuit (3).

6. A control circuit (6) according to any one of Claims 3 to 5,
which is designed as an Application Specific Integrated Circuit (ASIC), microcontroller or hybrid version thereof.

7. A power factor correction circuit (3) for a lamp operating device having a control circuit (6) according to any one of Claims 3 to 6.

8. A power factor correction circuit (3) according to Claim 7,
furthermore having a coil (L1) supplied with alternating voltage and loaded and unloaded by the switch (S1).

9. An operating device for a lamp (LA) for the lamp type detection of a lamp (LA) of a load circuit (5) connected to the operating device having:

- a PFC circuit (3) with a clocked switch (S1), means for evaluating at least one clocking parameter, such as, for example, the duty cycle, the frequency, the switched-on time $t_{on}$ and/or the switched-off time of the switch (S1) of the PFC circuit (3), in order to infer a lamp type therefrom and depending thereon to set at least one lamp operating parameter of the operating device,
**characterized by**
means for operating the lamp (LA) with constant controlled lamp current during the evaluation of the at least one clocking parameter.

10. An operating device according to Claim 9,

wherein the load circuit (5) has an LC oscillating circuit.

## Revendications

1. Procédé de détection du type de lampe d'une lampe (LA), raccordée à un appareil de commande, d'un circuit de charge (5),
l'appareil de commande comprenant un circuit PFC (3) avec un commutateur cadencé (S1), qui met à disposition une tension DC,
comprenant l'étape suivante :

   - analyse d'au moins un paramètre de cadencement, par exemple du rapport cyclique, de la fréquence, de la durée d'activation $t_{on}$ et/ou de la durée de désactivation du commutateur (S1) du circuit PFC (3), afin d'en déduire un type de lampe et de régler, à partir de cela, au moins un paramètre de fonctionnement de lampe de l'appareil de commande,

   **caractérisé en ce que** l'analyse a lieu lors du fonctionnement de la lampe (LA) avec une régulation à un courant de lampe constant.

2. Procédé selon la revendication 1,
la régulation effectuée fait varier, en tant que grandeur de réglage, une tension de circuit intermédiaire (Uz) mise à disposition par le circuit PFC (3) et/ou la fréquence d'un onduleur (4) raccordé au circuit PFC (3).

3. Circuit de commande (6) d'un circuit de correction de facteur de puissance ou PFC (3), contrôlé par un commutateur (S1), pour la détection du type de lampe d'une lampe (LA), raccordée à un appareil de commande, d'un circuit de charge (5), comprenant :

   - des moyens pour l'analyse d'au moins un paramètre de cadencement, par exemple du rapport cyclique, de la fréquence, de la durée d'activation $t_{on}$ et/ou de la durée de désactivation du commutateur (S1) du circuit PFC (3), afin d'en déduire un type de lampe et de régler, à partir de cela, au moins un paramètre de fonctionnement de lampe et
   - des moyens pour la régulation de la puissance mise à disposition par le circuit PFC (3),
   **caractérisé par**
   - des moyens pour la commande de la lampe (LA) avec un courant de lampe régulé de manière constante pendant l'analyse du paramètre de cadencement.

4. Circuit de commande (6) selon la revendication 3, comprenant l'analyse de la durée d'activation $t_{on}$ du commutateur (S1) du circuit PFC (3).

5. Circuit de commande (6) selon l'une des revendications 3 à 4, la régulation effectuée faisant varier, en tant que grandeur de réglage, une tension de circuit intermédiaire (Uz) mise à disposition par le circuit PFC (3) et/ou la fréquence d'un onduleur (4) raccordé au circuit PFC (3).

6. Circuit de commande (6) selon l'une des revendications 3 à 5, qui est conçu comme un circuit intégré spécifique à l'application (Application Specific Integrated Circuit - ASIC), micro-contrôleur ou une version hybride de ceux-ci.

7. Circuit de correction de facteur de puissance (3) pour un appareil de commande de lampe comprenant un circuit de commande (6) selon l'une des revendications 3 à 6.

8. Circuit de correction de facteur de puissance (3) selon la revendication 7, comprenant en outre une bobine (L1) alimentée avec une tension alternative et chargée et déchargée par le commutateur (S1).

9. Appareil de commande pour une lampe (LA) pour la détection du type de lampe d'une lampe (LA), raccordée à l'appareil de commande, d'un circuit de charge (5), comprenant :

   - un circuit pFC (3) avec un commutateur cadencé (S1),
   - des moyens pour l'analyse d'au moins un paramètre de cadencement, par exemple du rapport cyclique, de la fréquence, de la durée d'activation $t_{on}$ et/ou de la durée de désactivation du commutateur (S1) du circuit PFC (3), afin d'en déduire un type de lampe et de régler, à partir de cela, au moins un paramètre de fonctionnement de lampe,

   **caractérisé par**
   des moyens pour la commande de la lampe (LA) avec un courant de lampe régulé de manière constante pendant l'analyse de l'au moins un paramètre de cadencement.

10. Appareil de commande selon la revendication 9, le circuit de charge (5) comprenant un circuit oscillant LC.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1881745 A1

- DE 102006011970 A1